# EUROPEAN PATENT SPECIFICATION

(11) **EP 2 634 380 B1**
(45) Date of publication and mention of the grant of the patent: **29.10.2014**
(21) Application number: 13157699.3
(22) Date of filing: 04.03.2013
(51) Int. Cl.: F01D 25/28, F02C 7/22, F02C 9/40, F16L 11/20

(54) **Gas turbine burner fuel feeding system**
Brennstoffzufuhrsystem für eine Gasturbine
Système d'alimentation en carburant pour une turbine à gaz

(30) Priority: 02.03.2012 IT TO20120190
(43) Date of publication of application: 04.09.2013
(73) Proprietor: Ansaldo Energia S.p.A., Genova (IT)
(72) Inventor: Dotta, Claudio, 17044 S. Martino Stella (IT); Fazio, Gian Paolo, 16149 Genova (IT); Galella, Rocco, 16151 Genova (IT)
(74) Representative: Boggio, Luigi

(56) References cited:
- EP-A1- 0 874 185
- JP-A- 8 261 861
- US-A- 6 082 392
- US-B2- 8 079 220

## Description

The present invention relates to a high safety gas turbine burner fuel feeding system, in particular for gas turbines adapted to be fed with different fuels.

EP 1736651A describes a gas turbine burner fuel feeding system which uses controlled-flexibility flexible pipings; flexible pipings are made of a metal material with a multi-tubular structure consisting of multiple sleeves, among which a bellows sleeve, concentrically coupled to each other; a similar structure, although relating to another technical field and for piping lengths of a different order of magnitude (tenths centimeters against meters in the case of gas turbine burner feeding) is known from EP-A-0681096.

While the known fuel feeding system is fully satisfactory, it has the drawback that controlled-flexibility pipings can undergo undesired wear due to the "fretting fatigue" phenomenon, caused by the friction of the metal pipings with each other and with the turbine casing, which occurs both in the assembly/maintenance step and above all, due to the movements caused by the thermal and mechanical stresses received in use by such pipings.

Another problem found in turbo-gas plant fuel feeding systems is represented by the risks related to possible fuel leaks from one or more burner feeding pipings, which is even more likely in the case of flexible pipings of the type in EP 1736651A, due to the "fretting fatigue" phenomenon.

It should be noted that gas turbines of fixed plants for energy generation are usually enclosed, along with the burner fuel feeding system, in a fluid-sealed casing or enclosure, monitored by specific sensors capable of detecting the presence of volatile substances in the air present into the enclosure, and thus capable of detecting gas leaks, for example, in the case of methane-fed turbo-gas plants.

However, on the one hand such systems are triggered with some delay as compared to the occurrence of the leak and on the other hand, they do not allow the piping from which the leak has occurred to be detected.

In the case of gas oil (diesel)-fed gas turbines, the liquid fuel is fed under pressure to the burners, thus the occurrence of an even minimal crack in one of the gas oil feeding pipings produces an atomized jet of gas oil which is dispersed in the closed environment of the containment casing, thereby increasing the risk of fire to unacceptable levels.

US2003/0094207 describes a flexible conduit in which the risk of leaks is reduced, since the conduit consists of two flexible pipings mounted one inside the other fluid sealed-wise. Firstly, this solution relates to a totally different technical field, i.e. it is intended to be used in vehicle discharge systems where, among the other things, the "fretting fatigue" phenomenon does not exist and in the second place, it is intended to prevent burnt gas leaks to the atmosphere, in the case the inner piping breaks up. Such a solution, if applied as it is to fuel feeding systems like the one of EP 1736651A, on the one hand does not seem adapted to the man skilled in the art to solve the "fretting fatigue" problem, which in US2003/0094207 is not even mentioned, and which actually, in the application contemplated in US2003/0094207, as already mentioned, does not exist, and in the second place, even if it was capable of restraining any fuel leaks, it does not solve the problem of providing an early alarm of the breakage of the inner piping, nor that of preventing atomized gas leaks, since nobody would notice the breakage of the inner piping and, should also the outer piping break up, exactly the same technical problems to be solved would happen again. Moreover, implementing a dual gas-sealed piping as that described would increase the cost of the fuel feeding system in the turbo-gas field, in an undesired manner. US8079220 and US6082392 do not solve the problem.

It is the object of the present invention to provide a gas turbine burner fuel feeding system which is fully compatible with the provisions of EP 1736651A, but without being subject to "fretting fatigue" and which, at the same time, provides an early and punctual alarm of possible fuel leaks, totally preventing possible gas oil atomization to the atmosphere, as well.

It is also an object of the invention to provide such a fuel feeding system in which, with minimal waste, it is possible to immediately detect the damaged piping, in particular in the case of gaseous fuel, which fuel feeding system has small overall dimensions, is cheap and easy to be installed.

According to the present invention, therefore, a pressurised fluid transport system according to claim 1 and a burner fuel feeding system for a gas turbine, according to claim 2 are provided.

In particular, the fuel feeding system according to the invention comprises at least one flexible conduit connecting a fuel manifold to the burner and the flexible conduit comprises a first piping with multiple metal walls comprising at least one bellows sleeve and a second piping radially external to the first one, and radially spaced apart from the first piping, so as to define an empty annular chamber therein, between the first and the second piping.

The second piping consists of a flexible sleeve made of a fire-retardant polymeric material and delimited by a smooth outer lateral wall which constitutes the outer lateral wall of the flexible conduit; and of a pair of stiff metal tubular hubs fixed onto respective smooth end stretches of the first piping and on which opposite ends of the flexible sleeve are fitted substantially fluid-tight manner; in combination, the fuel feeding system also comprises at least one pressure or level sensor and at least one of the hubs is laterally provided with threaded mouth or a nozzle for connecting the empty annular chamber with the sensor in such a manner so as to enable the sensor to detect fuel leaks from the first piping.

Preferably, the feeding system provides for fluid-tightly fitting a pressure sensor directly onto a hub of the second piping of each flexible conduit and for providing the sensor with optical signalling means arranged at the threaded mouth or nozzle, so as to be visible externally to the flexible conduit and directly arranged onto the same conduit.

Alternatively or in addition to such a solution, the mouth or nozzle is fluid-tightly connected to a pipe which radially leads into a collecting manifold for the fuel that may exit from the first piping; the collecting manifold is provided with a tank provided in turn with said sensor. Therefore, in the case a plurality of flexible conduits is provided, it is possible to connect all the conduits to a single collecting manifold, and thus use a single sensor, a particularly effective solution in the case of a liquid fuel, such as gas oil, where a simple level sensor may be used.

Thereby, an early alarm can be obtained in all cases, since the sensor is triggered before the internal environment of the containment casing or enclosure of the turbine is saturated by volatile substances to such an extent as to trigger the alarm sensors already present in the prior art; moreover, by providing a sensor for each conduit, it is also possible to immediately know which piping has been damaged. Finally, by making the smooth surface flexible sleeve of the second piping of polymeric, preferably silicone, material, the "fretting fatigue" phenomenon it totally eliminated, ensuring a very high time-course duration and reliability of the fuel feeding system according to the finding.

Moreover, above all, in the case of liquid fuels, the risk of leaks with forming of fuel "sprays" which are very dangerous for fire hazards, is completely prevented. In fact, the flexible sleeve blocks such a leak and the sensor gives the alarm well before the outermost piping may crack as well.

Finally, it is apparent that the present invention may be applied to any pressurized fluid transport system, for quickly and safely detecting possible leaks while preventing sudden dispersions of the pressurized fluid.

The invention therefore also relates to a pressurized fluid transport system according to claim 1.

Further features of the present invention will appear clearly from the following description of a purely exemplary and non-limiting embodiment thereof, made with reference to the figures of the accompanying drawings, in which:
- figure 1 shows an elevational, longitudinal sectional view of a construction detail of the fuel feeding system according to the invention;
- figure 2 shows a diagrammatic view of the fuel feeding system according to the invention in the case of a turbine provided with a plurality of burners arranged as a crown about the turbine; and
- figure 3 shows a partially diagrammatic and perspective three-fourth rear view of a gas turbine casing shown open and with parts removed for a better understanding, provided with the fuel feeding system according to the invention, shown at a burner arranged beneath the gas turbine.

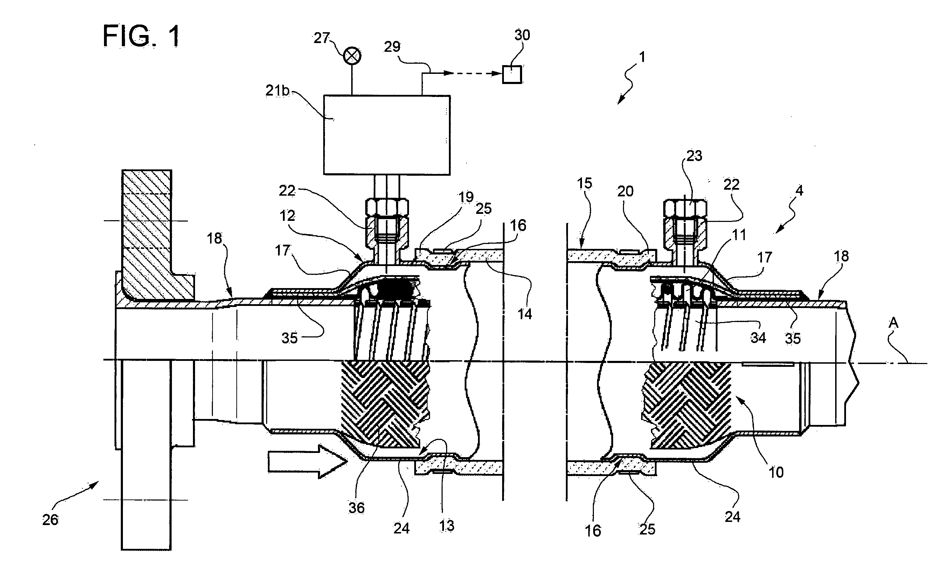

With reference to figures 1 to 3, reference numeral 1 denotes as a whole a fuel feeding system for a burner 2 of a gas turbine 3 comprising at least one flexible conduit 4 connecting a fuel manifold 5 with burner 2.

While herein and hereinafter the fuel feeding system according to the invention is described with reference to a gas turbine, it is clear that it may be used in any application contemplating the transport of gaseous or liquid fuels, generally pressurized, along flexible pipings. More generally, the fuel feeding system 1 may be configured as a transport system of a generic pressurized fluid, in the example shown consisting of a liquid or gaseous fuel, but which more generally may also consist of a not necessarily flammable fluid.

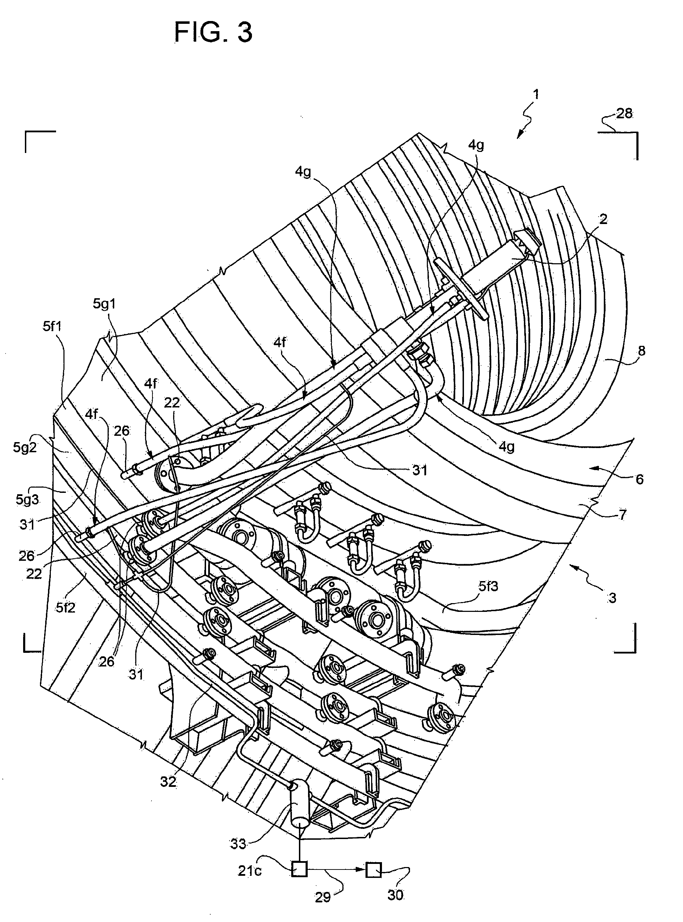

In the preferred embodiment, shown in figure 3, the gas turbine 3 is provided with a plurality of burners 2, for example twenty-four (only one of which is shown for simplicity), which may be fed either with gaseous fuel, such as methane, or with liquid fuel, such as gas oil, arranged as a crown about a tubular casing 6 of turbine 3, a part of which is visible in figure 3.

The feeding system 1 therefore comprises a first plurality of circular annular manifolds 5f1, 5f2 and 5f3 for the liquid fuel and a second plurality of circular annular manifolds 5g1, 5g2 and 5g3 for the gaseous fuel, each of which is provided with a plurality of flexible conduits 4f for the liquid fuel (manifolds 5f1, 2, 3) and 4g for the gaseous fuel (manifolds 5g1, 2, 3), which radially branch off as a crown from the annular manifolds 5f1, 2, 3 and 5g1, 2, 3, respectively, in a number of one for each burner 2.

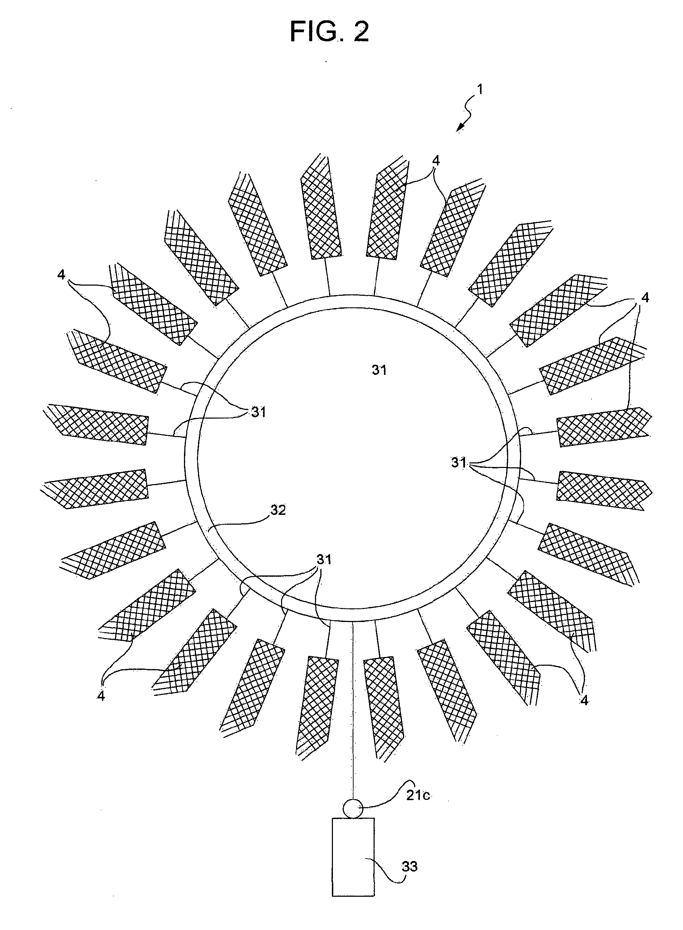

The circular annular manifolds 5f1, 2, 3 and 5g1, 2, 3 are all arranged concentric to one another and aligned at a single lying plane, crosswise turbine 3, arranged slanted in figure 3, and the flexible conduits 4g and 4f are all equal to one another for each feeding line formed by an annular manifold and by the related flexible conduits, therefore figure 1 only shows one, denoted as a whole with reference numeral 4. Figure 2 diagrammatically shows the twenty-four conduits 4f, arranged as a crown about turbine 3, which is not shown for simplicity.

According to a feature of the invention and with particular reference to figure 1, each flexible conduit 4 (both 4f and 4g) comprises a first piping 10 with multiple metal walls comprising at least one bellows sleeve 11 and a second piping 12 arranged coaxially and radially external to piping 10, and radially spaced apart from piping 10, so as to define an empty tubular annular chamber 13 therein, between pipings 10 and 12.

Piping 12 consists of: a flexible sleeve 14 made of a fire-retardant polymeric material, preferably of a low friction coefficient type, and delimited by a smooth outer lateral wall 15 which constitutes the outer lateral wall of the corresponding flexible conduit 4; and of a pair of stiff metal tubular hubs 17, in particular socket-like shaped, fixed onto respective smooth end stretches 18 of piping 10 and on which hubs opposite ends 19, 20 of the flexible sleeve 14 are fitted, substantially in a fluid tight manner.

According to the invention, and in combination with the structure described thus far, the fuel feeding system 1 also comprises at least one sensor 21, in particular one or more pressure sensors 21b, and/or one (or more) level sensor 21c; moreover, at least one of hubs 17 and preferably both, is/are laterally provided with a threaded mouth or nozzle 22 for connecting the empty annular chamber 13 with one sensor 21 so as to enable sensor 21 to detect fuel leaks from piping 10.

In the example shown, both opposite tubular hubs 17 of piping 12 are each provided with a respective threaded mouth or nozzle 22; nozzle 22 not being connected with sensor 21 (like that shown on the right in figure 1) is fluid-sealed closed by a threaded cap 23.

Moreover, in order to implement the above-mentioned fluid-sealed coupling achieving likewise the object of limiting the construction costs of the fuel feeding system 1, the opposite ends 19, 20 of the flexible sleeve 14 are simply fitted in contact onto respective overhangly projecting ends 24 of the tubular hubs 17, socket-like shaped, and are fixed onto the same by respective circumferential clamping metal annular bands 25 (of the type similar to those used in household systems). In particular, end 24 of each tubular hub 17 is provided with an annular shallow shaping 16, preferably obtained by means of plastic deformation with diameter reduction of a lateral wall portion of end 24, defining a groove at which band 25 is mounted, which band thus sandwiches the corresponding end 19 or 20 of the flexible sleeve 14 against the tubular hub 17 end 24 so as to deform it and push an annular portion thereof within the groove or annular shallow shaping 16.

Thereby, a simple and cost-effective connection of sleeve 14 with hubs 17 is obtained which creates both a pressure- and a labyrinth- seal which is totally effective both against liquids and also against possible gases, which prevents the escape from chamber 13 of any type of fuel that may have entered therein, at least for a certain time. Hubs 17 are then circumferentially welded to stretches 18, thus integrally and fluid-tightly connecting piping 12 to piping 10. The flexible conduit 4 thus formed is also provided with connecting ends 26, only one of which is shown in figure 1, conduit 4 being shown truncated, for the fluid-sealed connection to manifolds 5. Ends 26 may be flanged, as in the example shown, or simply threaded.

As shown in figure 1, each piping 12 is provided with a sensor 21 applied fluid-tightly mounted directly onto a threaded mouth or nozzle 22 in place of cap 23. In the preferred embodiment of the invention, all conduits 4g are provided with a pressure sensor 21b on one of the two threaded nozzles 22 thereof. Each sensor 21b is provided with optical signalling means 27, for example a LED light or lamp, which are arranged at the threaded mouth or nozzle 22 so as to be visible externally to the flexible conduit 4 and which therefore are directly arranged onto each same conduit 4g.

Thereby, and thanks to the above-described connection system between ends 19, 20 and hubs 17, in the case of a methane leak from one of pipings 10, the pressure into chamber 13 rises immediately, thus activating sensor 21b and alarm light 27. An operator can thus immediately identify the damaged conduit 4g at a glance, even standing outside a containment casing (enclosure) 28 of turbine 3 (only diagrammatically shown in figure 3), for example through a window of the same, or in any case he/she can identify the leaking tube during an inspection on the gas turbine, entering into casing 28, since there are no leaks to the outside yet.

Moreover, sensors 21b are all connected, via a data transmission line 29, with an alarm unit 30, for example located in the control room of turbine 3. Thereby, an early leak alarm is obtained well before the presence of gas is detected inside casing 28 by the normally supplied gas sensors.

The same thing may happen in the case of a gas oil leak, further preventing the atomization of the same: in fact, even if under pressure, gas oil collects into chamber 13 without crossing sleeve 14.

As shown in figures 2 and 3, as an alternative or in combination with what described above, the threaded mouths or nozzles 22 of each (of some) piping 12 may be fluid-tightly connected, rather than directly with a sensor 21, with a collecting pipe 31 which radially leads into a collecting manifold 32 for the fuel that may escape from piping 10; the collecting manifold 32 is provided with a tank 33, in turn provided with a sensor 21.

If the fuel is a liquid fuel, the collecting manifold 32 is annular in shape and tank 33 is vertically arranged, in use, beneath the gas turbine 3, and is provided with a level sensor 21c, of mechanical or pneumatic type as well.

In the example shown (figure 3), a collecting pipe 31 branches off from a threaded mouth or nozzle 22 of the outer piping 12 of each conduit 4f which pipe leads into an annular manifold 32 for collecting the liquid fuel provided at the bottom with a tank 33 equipped with a single level sensor 21c in common to all conduits 4f; on the other hand, a threaded mouth or nozzle 22 of the outer piping 12 of each conduit 4g is provided with a pressure sensor 21b equipped with an optical signaller 27 outside conduit 4g.

In order to ensure the required sturdiness, reliability and controlled flexibility, each piping 10 of each flexible conduit 4 comprises an internal liner defined by a first radially innermore cylindrical sleeve 34, formed by a crimped helical metal strip (however, this element is not strictly necessary), a second radially intermediate metal sleeve formed by the bellows sleeve 11, which ends with opposite smooth ends 35, and an external stainless steel braid defined by a third radially outermore metal sleeve 36 formed of a braided metal mesh and fitted in contact with the bellows sleeve 11, shown in an external view in figure 1, at the bottom (beneath a symmetry axis A of conduit 4).

The metal sleeves 34, 11 and 36 are integrally connected, in a known manner, at the opposite ends. On the other hand, the flexible sleeve 14 of piping 12 is, according to the invention, made of a silicone polymer which is fire-retardant or made fire-retardant by the addition of suitable additives.

This material (or another one having equivalent technical features) surprisingly allows the underlying piping 10 to be protected from any "fretting fatigue" phenomenon in the operating conditions of turbine 3. Therefore, in the field of fuel feeding, in particular for turbo-gas plants, it is a completely innovative use of a sleeve made with such a material. Moreover, its combination with the stiff tubular hubs 17 provides the solution to the fuel leak problem.

## Claims

1. A pressurized fluid transport system comprising at least one flexible conduit (4), in particular connectable to a fuel manifold (5) to feed a burner; wherein the flexible conduit comprises a first piping (10) with multiple metal walls comprising at least one bellows sleeve (11) and a second piping (12) radially external to the first one, and radially spaced apart from the first piping, so as to define an empty annular chamber (13) therein, between the first and the second piping (13); **characterized in that** the second piping (12) consists of: a flexible sleeve (14) made of a fire-retardant polymeric material and delimited by a smooth outer lateral wall (15) that constitutes the outer lateral wall of the flexible conduit; and of a pair of stiff metal tubular hubs (17) fixed onto respective smooth end stretches (18) of the first piping and on which hubs opposite ends (19, 20) of the flexible sleeve (14) are fitted in a substantially fluid tight manner; and **in that** in combination, the pressurized fluid transport system comprises at least one pressure (21b) or level (21c) sensor; at least one of the hubs being laterally provided with a threaded mouth or a nozzle (22) for connecting the empty annular chamber (13) with the sensor (21) so as to enable the sensor to detect pressurized fluid leaks from the first piping.

2. A pressurized fluid transport system according to claim 1, which system is a fuel feeding system (1) for a burner (2) of a gas turbine (3), comprising at least one said flexible conduit (4) and further comprising a fuel manifold (5) connectable to the burner; wherein the transported fluid is a fuel and the flexible conduit is made in such a manner so as to enable the sensor (21) to detect fuel leaks from the first piping.

3. A system according to claim 2, **characterized in that** the sensor is a pressure sensor (21b) directly fluid-tight mounted onto said mouth (22).

4. A system according to claim 3, **characterized in that** said sensor (21b) is provided with optical signalling means (27) which are arranged at said threaded month or nozzle (22) so as to be visible externally to the flexible conduit (4) and are directly arranged onto the same conduit.

5. A system according to one of the preceding claims 2 to 4, **characterized in that** it further comprises a collecting pipe (31) and a collecting manifold (32), the collecting pipe radially leading into the collecting manifold (32); said threaded mouth or nozzle (22) being fluid-tightly connected to said collecting pipe (31) to collect the fuel that may exit from the first piping, in the collecting manifold (32); the collecting manifold being provided, in particular if the fuel is a liquid fuel, with a tank (33) provided in turn with said sensor (21).

6. A system according to claim 5, to feed fuel in use to a gas turbine provided with a plurality of burners (2), arranged as a crown about the same, **characterized in that** the fuel manifold (5) is annular and **in that** it comprises a plurality of said flexible conduits (4) which branch off as a crown from said annular manifold, in a number of at least one per each burner to be fed in use, wherein if the fuel is a liquid fuel, the collecting manifold (32) is annular as well and the tank (33) is vertically arranged and, in use, is arranged underneath the gas turbine, and is provided with a level sensor (21c).

7. A system according to one of the preceding claims, **characterized in** further comprising an alarm unit (30); the sensor (21) being connected with the alarm unit (30) via a data transmission line (29).

8. A system according to one of the preceding claims, **characterized in that** both opposite tubular hubs (17) of the second piping are each provided with a respective said threaded mouth or nozzle (22); the threaded mouth or nozzle not being connected to the sensor being fluid-tightly closed by means of a threaded cap (23).

9. A system according to one of the preceding claims, **characterized in that** said opposite ends (19, 20) of the flexible sleeve are simply fitted in contact onto respective overhangly projecting ends (24) of the tubular hubs, integrally obtained therewith, and are fixed onto the same by respective circumferential clamping annular metal bands (25).

10. A system according to claim 9, **characterized in that** said ends of the tubular hubs are each provided with an annular shallow shaping (16) defining an annular groove, preferably obtained by means of plastic deformation of an outer wall portion of the end (24) of the tubular sleeve, at which shallow shaping said band (25) is mounted, the band sandwiching the corresponding end (19, 20) of the flexible sleeve against the tubular hub end so as to deform it and push an annular portion thereof within said shallow shaping (16).

11. A system according to one of the preceding claims designed to feed fuel to a gas turbine (3) provided with a plurality of burners which may be fed with either gaseous fuel or liquid fuel, arranged as a crown about the same, **characterized in that** it comprises a first plurality of circular annular manifolds (5f1, 2, 3) for a liquid fuel, each of which is provided with a plurality of first flexible conduits (4f) which branch off as a crown from said annular manifold, in a number of one per each burner to be fed in use, a pipe (31) branching off from a mouth (22) of the second piping of each one of them, which pipe leads into an annular manifold (32) for collecting the liquid fuel and provided at the bottom with a tank (33) equipped with a single level sensor (21c) in common to all the first conduits (4f); and **in that** it comprises a second plurality of circular annular manifolds (5g1, 2, 3) for a gaseous fuel, each of which is provided with a plurality of second flexible conduits (4g) which branch off as a crown from said annular manifold, in a number of one per each burner to be fed in use, a mouth (22) of the second piping of each one of them is provided with said pressure sensor (21b) equipped with an optical signaller (27) outside the piping; the circular annular manifolds (5) being all arranged concentric to one another and aligned at a single lying plane, crosswise in use the turbine, and the first and second flexible conduits (4f, 4g) being all equal to one another for each feeding line defined by a manifold and by the respective conduits.

12. A system according to one of the preceding claims, **characterized in that** each said first piping (10) of each said flexible conduit optionally comprises an internal liner defining a first radially innermore cylindrical sleeve (34) formed by a crimped helical metal strip, a second radially intermediate metal sleeve, formed by said bellows sleeve (11), which ends with opposite smooth ends (35) and an external stainless steel braid defining a third radially outermost metal sleeve (36), formed of a braided metal mesh and fitted in contact with the bellows sleeve (11), the first, second and third metal sleeves being integrally jointed at the opposite ends; said flexible sleeve (14) of the second piping being made of a silicon polymer.

## Patentansprüche

1. Unter Druck stehendes Fluid-Transportsystem, umfassend wenigstens eine biegsame Leitung (4), die insbesondere mit einem Brennstoffverteiler (5) verbunden werden kann, um einen Brenner zu versorgen; wobei die biegsame Leitung eine erste Rohrleitung (10) mit mehreren Metallwänden, welche wenigstens eine Balgmuffe (11) umfassen, und eine zweite Rohrleitung (12) umfasst, die radial außerhalb der ersten Rohrleitung und radial in einem Abstand von der ersten Rohrleitung angeordnet ist, um darin (13) eine leere ringförmige Kammer (13) zwischen der ersten und der zweiten Rohrleitung zu definieren; **dadurch gekennzeichnet, dass** die zweite Rohrleitung (12) aus Folgendem besteht: einer biegsamen Muffe (14), die aus einem feuerhemmenden polymeren Material hergestellt und durch eine glatte äußere laterale Wand (15) begrenzt ist, welche die äußere laterale Wand der biegsamen Leitung bildet; und einem Paar steifer metallener röhrenförmiger Naben (17), die auf jeweiligen glatten Endstücken (18) der ersten Rohrleitung fixiert sind, und wobei auf diesen Naben gegenüberliegende Enden (19, 20) der biegsamen Muffe (14) auf eine im Wesentlichen flüssigkeitsdichte Art und Weise aufgesetzt sind; und dass, in Kombination, das unter Druck stehende Fluid-Transportsystem wenigstens einen Druck- (21b) oder Niveau- (21c) Sensor umfasst; wobei wenigstens eine der Naben lateral mit einer Mündung oder einem Ansatzrohr mit Gewinde (22) zum Verbinden der leeren ringförmigen Kammer (13) mit dem Sensor (21) versehen ist, damit der Sensor Leckagen des unter Druck stehenden Fluids aus der ersten Rohrleitung erfassen kann.

2. Unter Druck stehendes Fluid-Transportsystem nach Anspruch 1, wobei das System ein Brennstoffzuführsystem (1) für einen Brenner (2) einer Gasturbine (3) ist, umfassend wenigstens eine biegsame Leitung (4) und ferner umfassend einen Brennstoffverteiler (5), der mit dem Brenner verbunden werden kann; wobei das transportierte Fluid ein Brennstoff ist und die biegsame Leitung derart ausgebildet ist, dass der Sensor (21) Brennstoffleckagen aus der ersten Rohrleitung erfassen kann.

3. System nach Anspruch 2, **dadurch gekennzeichnet, dass** der Sensor ein Drucksensor (21b) ist, der fluiddicht direkt auf der Mündung (22) befestigt ist.

4. System nach Anspruch 3, **dadurch gekennzeichnet, dass** der Sensor (21b) mit optischen Signalmitteln (27) versehen ist, die an der Mündung oder dem Ansatzrohr mit Gewinde (22) angeordnet sind, um außerhalb der biegsamen Leitung (4) sichtbar zu sein, und die direkt auf der Leitung angeordnet sind.

5. System nach einem der vorangehenden Ansprüche 2 bis 4, **dadurch gekennzeichnet, dass** es ferner ein Sammelrohr (31) und einen Sammelverteiler (32) umfasst, wobei das Sammelrohr radial in den Sammelverteiler (32) hineinführt; wobei die Mündung oder das Ansatzrohr mit Gewinde (22) fluiddicht mit dem Sammelrohr (31) verbunden ist, um den Brennstoff, falls er aus der ersten Rohrleitung austritt, in dem Sammelverteiler (32) zu sammeln; wobei der Sammelverteiler, insbesondere, wenn der Brennstoff ein flüssiger Brennstoff ist, mit einem Tank (22) versehen ist, der wiederum mit dem Sensor (21) versehen ist.

6. System nach Anspruch 5, um Brennstoff bei Benutzung einer Gasturbine zuzuführen, welche mit mehreren Brennern (2) versehen ist, die über dieser wie eine Krone angeordnet sind, **dadurch gekennzeichnet, dass** der Brennstoffsammelverteiler (5) kreisförmig ist; und dass er mehrere biegsame Leitungen (4) umfasst, die wie eine Krone von dem ringförmigen Verteiler abzweigen, in einer Anzahl von wenigstens einer pro Brenner, der bei Benutzung versorgt werden muss, wobei, wenn der Brennstoff ein flüssiger Brennstoff ist, der Sammelverteiler (32) ebenfalls ringförmig ist, und der Tank (33) vertikal angeordnet und bei Benutzung unterhalb der Gasturbine angeordnet und mit einem Niveausensor (21c) versehen ist.

7. System nach einem der vorangehenden Ansprüche, **dadurch gekennzeichnet, dass** es ferner eine Alarmeinheit (30) umfasst; wobei der Sensor (21) mit der Alarmeinheit (30) über eine Datenübertragungsleitung (29) verbunden ist.

8. System nach einem der vorangehenden Ansprüche, **dadurch gekennzeichnet, dass** beide gegenüberliegende röhrenförmige Naben (17) der zweiten Rohrleitung jeweils mit einer Mündung oder einem Ansatzrohr mit Gewinde (22) versehen sind; wobei die Mündung oder das Ansatzrohr mit Gewinde, die oder das nicht mit dem Sensor verbunden ist, mittels einer Schraubkappe (23) fluiddicht verschlossen ist.

9. System nach einem der vorangehenden Ansprüche, **dadurch gekennzeichnet, dass** die gegenüberliegenden Enden (19, 20) der biegsamen Hülse in Kontakt auf entsprechende überhängend hervorstehende Enden (24) der röhrenförmigen Naben einfach aufgesetzt sind, die integral mit diesen ausgebildet sind, und durch entsprechende periphere klemmende ringförmige Metallbänder (25) auf diesen fixiert werden.

10. System nach Anspruch 9, **dadurch gekennzeichnet, dass** die Enden der röhrenförmigen Naben jeweils mit einer ringförmigen flachen Formveränderung (16) versehen sind, welche eine ringförmige Vertiefung definiert, die vorzugsweise mittels einer plastischen Verformung eines Abschnittes der Außenwand des Endes (24) der röhrenförmigen Hülse erhalten wird, wobei an dieser flachen Formveränderung das Band (25) befestigt ist, wobei das Band das entsprechende Ende (19, 20) der biegsamen Hülse gegen das Ende der röhrenförmigen Nabe einzwängt, um es zu verformen und einen ringförmigen Abschnitt davon innerhalb der flachen Formveränderung (16) zu drücken.

11. System nach einem der vorangehenden Ansprüche, dafür konzipiert, um Brennstoff einer Gasturbine (3) zuzuführen, die mit mehreren Brennern versehen ist, welchen entweder ein gasförmiger Brennstoff oder ein flüssiger Brennstoff zugeführt werden kann, wobei die Brenner wie eine Krone um diese herum angeordnet sind, **dadurch gekennzeichnet, dass** es eine erste Mehrzahl an umlaufenden ringförmigen Verteilern (5f1, 2, 3) für einen flüssigen Brennstoff umfasst, von denen jeder mit mehreren der ersten biegsamen Leitungen (4f) versehen ist, welche wie eine Krone von dem ringförmigen Verteiler abzweigen, in einer Anzahl von einer pro Brenner, der bei Benutzung versorgt werden soll, wobei ein Rohr (31) von einer Mündung (22) der zweiten Rohrleitung von jedem von ihnen abzweigt, wobei das Rohr zum Sammeln des flüssigen Brennstoffs zu einem ringförmigen Verteiler (32) führt, und am Boden mit einem Tank (33) ausgerüstet ist, der mit einem einzelnen Niveausensor (21c) ausgestattet ist, der all den ersten Leitungen (4f) gemeinsam ist; und dadurch, dass es eine zweite Mehrzahl an umlaufenden ringförmigen Verteilern (5g1, 2, 3) für einen gasförmigen Brennstoff umfasst, von denen jeder mit mehreren der zweiten biegsamen Leitungen (4g) versehen ist, welche wie eine Krone von dem ringförmigen Verteiler abzweigen, in einer Anzahl von einer pro Brenner, der bei Benutzung versorgt werden soll, wobei eine Mündung (22) der zweiten Rohrleitung von jedem von ihnen mit dem Drucksensor (21b) versehen ist, der mit einem optischen Signalgeber (27) außerhalb der Rohrleitung ausgestattet ist; wobei die umlaufenden ringförmigen Verteiler (5) alle konzentrisch zueinander angeordnet sind und in einer einzelnen liegenden Ebene ausgerichtet sind, kreuzweise bei der Verwendung der Turbine, und die ersten und zweiten biegsamen Leitungen (4f, 4g) alle gleich zueinander für jede Zuführungslinie sind, die durch einen Verteiler und durch die entsprechenden Leitungen definiert ist.

12. System nach einem der vorangehenden Ansprüche, **dadurch gekennzeichnet, dass** jede biegsame Leitung der ersten Rohrleitung (10) optional eine innere Auskleidung umfasst, welche eine erste radial mehr innen liegende zylindrische Hülse (34) definiert, welche durch einen verpressten schraubenförmigen Metallstreifen gebildet ist, eine zweite radial in der Mitte liegende Metallhülse, welche durch die Balgmuffe (11) gebildet ist, welche mit gegenüberliegenden glatten Enden (35) endet, und eine äußere Edelstahlumflechtung, welche eine dritte radial ganz außen liegende Metallhülse (36) definiert, gebildet aus einem geflochtenen Metallgitter und in Kontakt mit der Balgmuffe (11) aufgesetzt, wobei die erste, zweite und dritte Metallhülse integral an den gegenüberliegenden Enden verbunden sind; wobei die biegsame Muffe (14) der zweiten Rohrleitung aus einem Silikonpolymer hergestellt ist.

## Revendications

1. Système de transport de fluide sous pression comprenant au moins un conduit flexible (4), pouvant être raccordé en particulier à un collecteur de combustible (5) pour alimenter un brûleur ; dans lequel le conduit flexible comprend une première tuyauterie (10) avec de multiples parois métalliques comprenant au moins un manchon à soufflet (11) et une deuxième tuyauterie (12) radialement à l'extérieur de la première, et espacée radialement de la première tuyauterie, de manière à définir une chambre annulaire vide (13) dans celui-ci, entre les première et deuxième tuyauteries (13) ; **caractérisé en ce que** la deuxième tuyauterie (12) comprend : un manchon flexible (14) réalisé en un matériau polymère ignifuge et délimité par une paroi latérale extérieure lisse (15) qui constitue la paroi latérale extérieure du conduit flexible ; et une paire de moyeux tubulaires métalliques rigides (17) fixés sur les parties d'extrémité lisses (18) respectives de la première tuyauterie et sur lesquels moyeux les extrémités opposées (19, 20) du manchon flexible (14) sont assemblées d'une manière sensiblement étanche au fluide ; et **en ce que**, en combinaison, le système de transport de fluide sous pression comprend au moins un capteur de pression (21b) ou de niveau (21c) ; au moins l'un des moyeux étant pourvu latéralement d'une embouchure ou buse (22) filetée pour raccorder la chambre annulaire vide (13) au capteur (21) de manière à permettre au capteur de détecter des fuites de fluide sous pression à partir de la première tuyauterie.

2. Système de transport de fluide sous pression selon la revendication 1, lequel système est un système de fourniture de combustible (1) pour un brûleur (2) d'une turbine à gaz (3), comprenant au moins un dit conduit flexible (4) et comprenant en outre un collecteur de combustible (5) pouvant être raccordé au brûleur ; dans lequel le fluide transporté est un combustible et le conduit flexible est réalisé de manière à permettre au capteur (21) de détecter des fuites de combustible à partir de la première tuyauterie.

3. Système selon la revendication 2, **caractérisé en ce que** le capteur est un capteur de pression (21b) monté directement de manière étanche au fluide sur ladite embouchure (22).

4. Système selon la revendication 3, **caractérisé en ce que** ledit capteur (21b) est pourvu de moyens de signalisation optiques (27) qui sont agencés au niveau de ladite embouchure ou buse (22) filetée de manière à être visibles à l'extérieur du conduit flexible (4) et qui sont directement agencés sur le même conduit.

5. Système selon l'une quelconque des revendications 2 à 4 précédentes, **caractérisé en ce qu'**il comprend en outre un tuyau de collecte (31) et un collecteur de collecte (32), le tuyau de collecte menant radialement dans le collecteur de collecte (32) ; ladite embouchure ou buse (22) filetée étant raccordée de manière étanche au fluide au dit tuyau de collecte (31) pour collecter le combustible qui peut sortir de la première tuyauterie, dans le collecteur de collecte (32) ; le collecteur de collecte étant pourvu, en particulier si le combustible est un combustible liquide, d'un réservoir (33) pourvu à son tour dudit capteur (21) .

6. Système selon la revendication 5, pour fournir un combustible en utilisation à une turbine à gaz pourvue d'une pluralité de brûleurs (2), agencés en tant que couronne autour de celle-ci, **caractérisé en ce que** le collecteur de combustible (5) est annulaire ; et **en ce qu'**il comprend une pluralité desdites conduites flexibles (4) qui se séparent en forme de couronne dudit collecteur annulaire en un nombre d'au moins une par brûleur à alimenter en utilisation, dans lequel, si le combustible est un combustible liquide, le collecteur de collecte (32) est également annulaire et le réservoir (33) est agencé verticalement et, en utilisation, est agencé au-dessous de la turbine à gaz, et est pourvu d'un capteur de niveau (21c).

7. Système selon l'une quelconque des revendications précédentes, **caractérisé en ce qu'**il comprend en outre une unité d'alarme (30) ; le capteur (21) étant connecté à l'unité d'alarme (30) par l'intermédiaire d'une ligne de transmission de données (29).

8. Système selon l'une quelconque des revendications précédentes, **caractérisé en ce que** les deux moyeux tubulaires (17) opposés de la deuxième tuyauterie sont pourvus chacun d'une dite embouchure ou buse (22) filetée respective ; l'embouchure ou buse filetée qui n'est pas raccordée au capteur étant fermée de manière étanche au fluide au moyen d'un capuchon fileté (23).

9. Système selon l'une quelconque des revendications précédentes, **caractérisé en ce que** lesdites extrémités opposées (19, 20) du manchon flexible sont assemblées simplement en contact sur les extrémités saillantes (24) en surplomb respectives des moyeux tubulaires, obtenues d'un seul tenant avec ceux-ci, et sont fixées sur celles-ci par des bandes métalliques (25) annulaires de serrage circonférentiel respectives.

10. Système selon la revendication 9, **caractérisé en ce que** lesdites extrémités des moyeux tubulaires sont pourvues chacune d'une forme peu profonde annulaire (16) définissant une gorge annulaire, de préférence obtenue par déformation plastique d'une partie de paroi extérieure de l'extrémité (24) du manchon tubulaire, au niveau de laquelle forme peu profonde ladite bande (25) est montée, la bande prenant en sandwich l'extrémité (19, 20) correspondante du manchon flexible contre l'extrémité de moyeu tubulaire de manière à la déformer et à pousser une partie annulaire de celle-ci dans ladite forme peu profonde (16).

11. Système selon l'une quelconque des revendications précédentes, conçu pour fournir un combustible à une turbine à gaz (3) pourvue d'une pluralité de brûleurs qui peuvent être alimentés soit en combustible gazeux, soit en combustible liquide, agencés en tant que couronne autour de la susdite, **caractérisé en ce qu'**il comprend une première pluralité de collecteurs annulaires circulaires (5f1, 2, 3) pour un combustible liquide ; chacun étant pourvu d'une pluralité de premières conduites flexibles (4f) qui se séparent en forme de couronne dudit collecteur annulaire, en un nombre d'une par brûleur à alimenter en utilisation, un tuyau (31) provenant d'une embouchure (22) de la deuxième tuyauterie de chacun d'eux, lequel tuyau mène dans un collecteur annulaire (32) pour collecter le combustible liquide et pourvu dans le fond d'un réservoir (33) équipé d'un capteur de niveau (21c) unique en commun pour la totalité des premières conduites (4f) ; et **en ce qu'**il comprend une deuxième pluralité de collecteurs annulaires circulaires (5g1, 2, 3) pour un combustible gazeux, chacun étant pourvu d'une pluralité de deuxièmes conduites flexibles (4g) qui se séparent en forme de couronne dudit collecteur annulaire, en un nombre d'une par brûleur à alimenter en utilisation, une embouchure (22) de la deuxième tuyauterie de chacun d'eux est pourvue dudit capteur de pression (21b) équipé d'un dispositif de signalisation optique (27) à l'extérieur de la tuyauterie ; les collecteurs annulaires circulaires (5) étant tous agencés concentriquement les uns aux autres et alignés au niveau d'un plan d'agencement unique transversalement en utilisation à la turbine, et les première et deuxième conduites flexibles (4f, 4g) étant toutes identiques les unes aux autres pour chaque ligne d'alimentation définie par un collecteur et par les conduites respectives.

12. Système selon l'une quelconque des revendications précédentes, **caractérisé en ce que** chaque dite première tuyauterie (10) de chaque dit conduit flexible comprend optionnellement une doublure interne définissant un premier manchon cylindrique radialement le plus à l'intérieur (34) formé par une bande métallique hélicoïdale sertie, un deuxième manchon métallique radialement intermédiaire, formé par ledit manchon à soufflet (11), lesquelles extrémités avec des extrémités lisses opposées (35) et une tresse en acier inoxydable externe définissant un troisième manchon métallique radialement le plus à l'extérieur (36), constitué d'une maille métallique tressée et assemblé en contact avec le manchon à soufflet (11), les premier, deuxième et troisième manchons métalliques étant joints d'un seul tenant aux extrémités opposées ; ledit manchon flexible (14) de la deuxième tuyauterie étant réalisé en un polymère de silicone.
